# EUROPEAN PATENT APPLICATION

(11) **EP 0 974 537 A2**
(43) Date of publication of application: **26.01.2000**
(21) Application number: 99113116.0
(22) Date of filing: 07.07.1999
(51) Int. Cl.: B65G 17/06

(54) **Belt conveyor for the treatment of materials**

(30) Priority: 10.07.1998 IT GE980060
(71) Applicant: Officina Meccanica, Carpenteria in Ferro e Costruzioni Meccaniche per Pastificio di Rovati Giancarlo, 16164 Genova Pontedecimo (IT)
(72) Inventor: Rovati, Gianfranco, 16164 Genova Pontedecimo (IT)
(74) Representative: Porsia, Attilio, Dr.

(57) **Abstract**

Conveyor belt for the treatment of materials including a plurality of section bars (1, 1') connected one another in succession through an articulated connection (2, 3', 4') and actuated by suitable driving means (13) coupled to suitable operating means. The surfaces of said belt where the material to be dried is placed consist in grates (6, 6') partially inserted in grooves (7, 7') obtained in the section bars (1, 1') and supported by suitable guides (9, 9') set on the lower surfaces (5, 5') of said section bars (1, 1').

## Description

The present inventions refers to conveyor belt devices for the treatment of materials such as for instance dryers, ventilation and/or humification plants, as well as any other type of conveyor belt plant for the thermic and/or physic treatment of materials .

The accuracy with which the process of conditioning of a material is done, such as for instance a food product like the pasta, is very important, because on it depends the final quality of the treated material, which is function of given parameter, such as for instance the final humidity degree which is to be checked with accuracy and has to be within certain limits.

In the field of the treatment of food products several types of belt conveyors are known, such as for instance the so-called rolling-shutter conveyor, consisting of a plurality of S shaped section bars, for instance aluminium made, hooked one another in connection with their ends so to build a conveyor belt on which is placed the product to be treated. Obviously said conveyor belt will be actuated in a known way by suitable driving means connected with their operating means. The product placed on the surface of said moving belt is subjected to the required physical treatments, which can be thermic treatments, in case the product has to be dried, obtained through ventilation with heated air for instance at 70°C - 120°C, in case the product to be treated is fresh pasta to be dried. Said air is supplied in the know way by suitable fans normally positioned under the lower surface of the conveyor belt and reach the product passing through the slots between one connection end and the other of two following section bars.

Nevertheless, the known treatment process above described has some disadvantages, since, first the air passing through the connection slots between one section bar and the other does not uniformly contact the product placed on the upper surface of said section bars, and this result in a limited thermal exchange if compared to the situation where for instance the air would uniformly reach all the product placed on the surface of the section bar, moreover the maintenance of such aluminium section bars is very difficult because for instance for their cleaning it is necessary to disassemble the belt piece by piece and the flexibility of the whole system is limited since the same section bars are used for every type of product to be treated and for every type of treatment to be done, when it would be instead advantageous to change every time the surfaces on which the product is, according to, for instance, the product type, the treatment which it has to be subjected to, its dimensions etc.

Aim of the present invention is to overcome the disadvantages previously mentioned by means of a conveyor belt including a plurality of section bars connected one another in succession through an articulated connection and actuated by suitable driving means coupled to suitable operating means characterized in that the surfaces of said conveyor belt where the material to be treated is placed consist in grates partially inserted in grooves obtained in these section bars and supported by suitable guides set on the lower surfaces of said section bars, being the lower surfaces bored to allow the conditioning air flow coming from a suitable air supplying mean to pass through the grates and to uniformly contact the material to be treated.

According to one aspect of the present invention said grates will consist of interlaced wires for instance of metallic material or advantageously of plastic material, so to reduce the production costs and also the total weight of the belt conveyor. Said grates are moreover extractable from the section bar to allow an easier maintenance of the conveyor itself without having necessarily disconnecting the section bars one from the other, and they are interchangeable with other ones having different dimensions of the single meshes, according to the dimensions of the material, food product or else, one desires to treat.

As a not limitative example, it is considered in this description the case where said belt conveyor is used to dry fresh pasta having any dimension and shape.

The present invention will be better understood by the following description, to be considered just as a not limitative example, of a preferred embodiment form with reference to the enclosed drawings, where:
- Fig. 1 is a partly sectioned perspective view of an embodiment form of two conveyor belt section bars of the present invention connected one another; and
- Fig. 2 is a plan view from below of the embodiment form of Fig. 1 of the conveyor belt of the present invention.

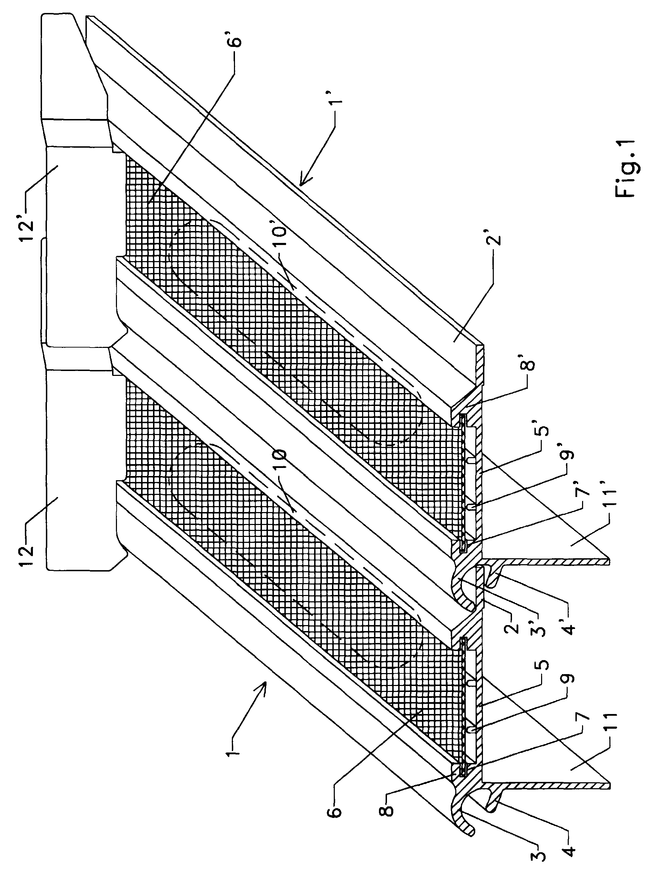

With reference to Fig. 1 it is to be noticed that according to the present invention the conveyor belt is formed by a set of section bars (in this figure two are shown) 1 and 1' for instance of aluminium, connected one another in an articulated way through the insertion of a fin 2 of the section bar 1 in a corresponding housing formed by two skirts 3' and 4' suitably shaped obtained from the piece of the following section bar 1' of the conveyor belt. As it is possible to notice the thickness of the fins 2 and 2' is greater than that of the lower surfaces 5 and 5' of said section bars 1 and 1', this is for structural needs of stiffness of the articulated connection between said two section bars where it will occur the greatest stress when the belt will wind around driving and transmission pulleys. Moreover, as one can see in the figure, according to the invention the upper surface of said section bars 1 and 1' is formed by grates 6 and 6' inserted in suitable slots 7 and 7' obtained on the side surface of suitable reliefs 8 and 8' of said section bars. The grates 6 and 6' are moreover supported by suitable intermediate guides 9 and 9' having the function to help the extraction from the slots 7 and 7' when it is necessary to provide for their maintenance or when it is desired to replace them with other ones having meshes more or less dense according to the dimensions of the material to be treated, and in the present case, of the pasta to be dried. Said pasta to be dried, placed on the upper surface of said grates, will be reached by a flow of hot air supplied by suitable ventilation means and coming in through the holes 10 and 10' made on the lower surfaces 5 and 5' of the section bars 1 and 1'. Moreover said grates can be made in any metallic or plastic material, for instance polyester, adapt for this type of drying process where it is possible to reach temperatures of, for instance, 120°C.

From the figure it is also possible to notice traverses 11 and 11' for the stiffening of the section bars 1 and 1', since it is necessary to guarantee a certain stiffness to the transversal flexion of said section bars which can reach transversal dimensions of 2 m and more. Advantageously are also provided side boards 12 and 12' suitably shaped and fastened with, for instance, bolts to the surfaces 5 and 5' of the section bars 1 and 1' to prevent the paste from falling sideways from the grates 6 and 6' during the motion of the conveyor belt drier.

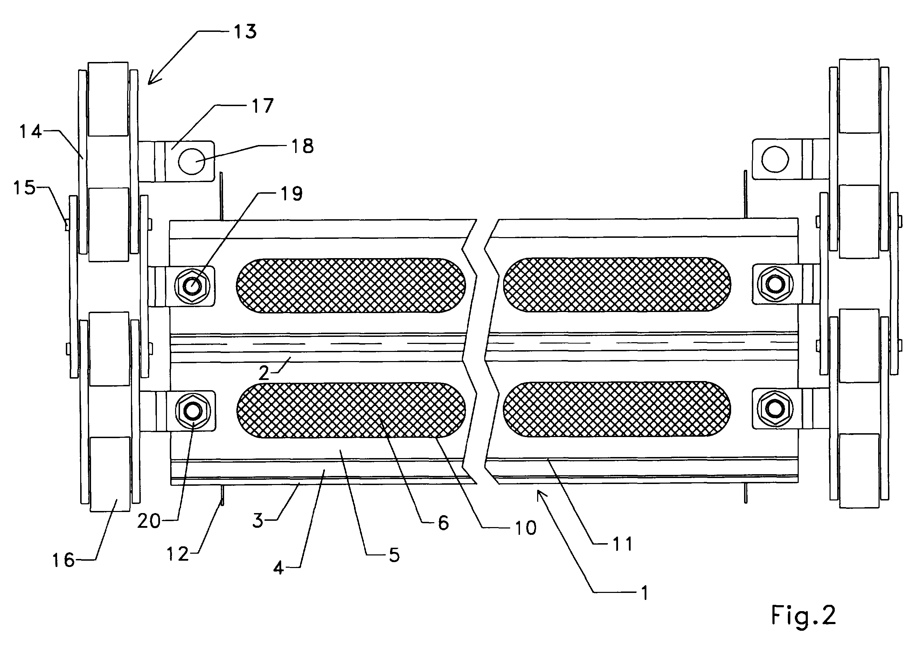

In Fig. 2 it is shown the embodiment form of Fig. 1 of the conveyor belt of the present invention viewed from below, where it is possible to see the means for the driving of said belt, said means in this figure are a driving chain 13 formed by plates 14 connected one another through pins 15 on which are free to rotate rolls 16, by means of which, in the known way, it is possible to advantageously replace to the sliding friction between the pins 15 of the chain and the teeth of the transmission toothed wheels (not shown) on which it will be winded said chain 13, the rolling friction between said rolls 16 and said corresponding teeth, and naturally the conveyor belt too will wind on the dragging and transmission toothed wheels. The connection between the conveyor belt and the chain 13 is done by means of brackets 17 suitably shaped obtained from the same piece of the plates 14 of said chain and provided with holes 18 into which it is possible to insert bolts 19 which will insert into corresponding holes on the section bars 1. Said connection means formed by the bolts 19 and the corresponding nuts 20 allow moreover the fastening of the side boards 12 to the surface 5 of the section bar 1.

As noticed from the previous description, there are many advantages resulting from the use of a conveyor belt according to the embodiment form described as an example, and various are the embodiment forms which can be used to obtain such advantages without getting out of the field of the enclosed claims.

## Claims

1. A conveyor belt for the treatment of materials including a plurality of section bars (1, 1') connected one another in succession through an articulated connection (2, 3', 4') and actuated by suitable driving means (13) coupled to suitable operating means, characterized in that the surfaces of said belt where the material to be dried is placed consist in grates (6, 6') partially inserted in grooves (7, 7') obtained in the section bars (1, 1') and supported by suitable guides (9, 9') set on the lower surfaces (5, 5') of said section bars (1, 1').

2. A conveyor belt according to claim 1, where said lower surfaces (5, 5') are bored to allow an air flow coming from a suitable supplying mean to pass through said grates (6, 6') and uniformly contact the material to be treated.

3. A conveyor belt for the treatment of materials according to claims 1 and 2, characterized in that said grates (6, 6') are extractable from said section bars (1, 1') and interchangeable.

4. A conveyor belt for the treatment of materials according to any one of the preceding claims, characterized in that said grates (6, 6') are made of a suitable metallic material.

5. A conveyor belt for the treatment of materials according to any one of the preceding claims 1 to 3, characterized in that said grates (6, 6') are made of a suitable plastic material.

6. A conveyor belt for the treatment of materials according to any one of the preceding claims, characterized in that it includes side boards (12, 12') by the sides of said section bars (1, 1') and connected to them to prevent the material to be dried from falling sideways.

7. A conveyor belt for the treatment of materials according to any one of the preceding claims, characterized in that it is particularly suitable for drying, ventilation, humification plants and in general for the thermic and/or physical treatment of materials, and in particular of food materials.
